# EUROPEAN PATENT APPLICATION

(11) **EP 2 341 162 A1**
(43) Date of publication of application: **06.07.2011**
(21) Application number: 11150213.4
(22) Date of filing: 05.01.2011
(51) Int. Cl.: C23C 4/12, C23C 4/18, C23C 26/00, C23C 28/00, F16C 33/20

(54) **Mechanical key for bearings**

(30) Priority: 05.01.2010 GB 1000126
(71) Applicant: Hayward Tyler Group Limited, Luton LU1 3LD (GB)
(72) Inventor: Morrow, Paul Joseph, Knebworth, Hertfordshire SG3 6AX (GB)
(74) Representative: Frost, Alex John

(57) **Abstract**

There is provided a method of preparing a substrate for receiving a bearing material. The method comprises applying a metallic layer to a surface of the substrate using twin wire arc thermal spraying of the metallic layer to the surface. The bearing material may be applied to the metallic layer and thereby attached to the substrate by at least one of: injection moulding; hot plate welding; sintering; and powder coating. The metallic layer acts to mechanically lock the bearing material to the substrate.

## Description

### Technical Field of the Invention

The present invention relates to a method of preparing a substrate for receiving a bearing material by applying a metallic layer to a surface of the substrate. In particular, the bearing material is a thermoplastic or thermoset material. The invention also concerns a method of attaching a material to a substrate.

### Background to the Invention

Hydrodynamic thrust bearings and journal bearings may be constructed by attaching a durable and low-friction material which provides the rubbing surface of the bearing to a substrate which provides a stiff supporting member and maintains the profile of the bearing surface to a high degree of accuracy.

Bearing materials such as polypropylene, polyethylenes, silicone rubber, fluoropolymers (e.g. PTFE), Acetal and PEEK have a very low co-efficient of friction and are therefore attractive for good bearing performance. A number of alternative methods are known for attaching the bearing material to the substrate.

The first is adhesively bonding a pre-moulded bearing material. The material properties which result in low co-efficient of friction inherently render these bearing materials difficult to adhere to a substrate. Conventional adhesives are generally not useful.

Secondly, various mechanical attachment methods are known. However, these have the disadvantage of providing discontinuous connection between the bearing material and the supporting member. This prevents the supporting member from maintaining the profile of the bearing surface to the necessary degree of accuracy.

Thirdly, moulding the bearing material onto the substrate can be performed, by least one of: injection moulding; hot plate welding; sintering; and powder coating. For example, the substrate may be placed in a mould and melted bearing material may be injected under pressure to completely fill the mould cavity and contact intimately with the surface of the substrate.

In this fourth case, means are provided for the melted bearing material to form a mechanical lock with physical retaining features provided in the substrate. For example, through holes with counterbores may be provided, but these have the disadvantage of providing discontinuous connection between the bearing material and the supporting member. This prevents the supporting member from maintaining the profile of the bearing surface to the necessary degree of accuracy.

Also, some bearing materials include additives such as graphite and carbon fibres. These have very low elongation at fracture. This brittleness results in a need to reduce stress raisers such as sharp internal corners around the retaining features and can have a significant effect on machining costs.

Preparation of the surface of the substrate to allow the bearing material to be uniformly and securely attached to the substrate is a challenge when implementing this fourth approach. A known process for preparing the surface of the substrate is by sintering a porous metal layer to the substrate and moulding the thermoplastic or thermoset layer over the porous layer. The melted bearing material flows into the pores of the sintered layer and is mechanically locked to the substrate.

Sintering is an effective process for large production quantities, but for small numbers of parts a more flexible alternative process is desirable to reduce setup time and cost.

### Summary of the Invention

Against this background, the present invention provides a method of preparing a substrate for receiving a bearing material comprising applying a metallic layer to a surface of the substrate using twin wire arc thermal spraying of the metallic layer to the surface. The bearing material may be received on the substrate by a moulding process, which may be at least one of: injection moulding; hot plate welding; sintering; and powder coating.

Thermal spraying is typically used to produce a smooth continuous surface of metallic layer. The present invention recognises that the parameters of the twin wire arc thermal spraying of the metallic layer can be adjusted to affect the pores and overhanging asperities of this layer. Moreover, both of the porosity and re-entrant features of the metallic layer control its performance as a mechanical key for adhering the bearing material layer, for example a thermoplastic or thermoset material, to the substrate. However, some combinations of process parameters adversely affect adhesion to the substrate. Advantageously, the substrate is metallic.

The present invention defines parameters that result in improved porosity and re-entrant features of the metallic layer compared with known techniques. For example, the twin wire arc thermal spraying may optionally use at least one of: an arc voltage between 31V and 35V; an air pressure between 2 bar and 3 bar; an arc current between 170 and 190A; and a stand off distance of 150mm. Also, these improvements do not appear to depend on the type of bearing material to be adhered to the substrate or the melt viscosity of that material.

Thermal spraying is more ecologically acceptable and results in fewer waste products and requires less power than other approaches. In addition, the mechanical key formed in this way spreads the load over the whole interface area without creating stress raisers.

Advantageously, the metallic layer comprises Aluminium Bronze.

In the preferred embodiment, the thickness of the metallic layer is between 0.18mm and 0.25mm. More preferably, the thickness of the metallic layer is between 0.2mm and 0.25mm. Most preferably, the thickness of the metallic layer is between 0.2mm and 0.22mm.

The method preferably further comprises grit blasting the surface of the substrate to SIS 055900 Sa3 (blast cleaning to pure metal) prior to the application of the metallic layer. More preferably, aluminium oxide grit is used. Most preferably, the aluminium oxide has a grit mesh size of between 80 and 120.

In a second aspect, the present invention may be found in a method of applying a metallic layer to a surface of a substrate, to prepare the substrate for receiving a bearing material. The method comprises twin wire arc thermal spraying of an Aluminium Bronze layer to the surface. The bearing material may be attached by at least one of: injection moulding; hot plate welding; sintering; and powder coating.

It has been found that Aluminium Bronze produces a better mechanical key surface than steel. The steel tends to produce globular features whereas the Aluminium Bronze is more fluid and creates splashes. Aluminium Bronze is also resistant to oxidation at the temperatures used for injection moulding or hot plate welding of PEEK material.

In a third aspect, the present invention may be found in a method of applying a metallic layer to a surface of a substrate, to prepare the substrate for receiving a bearing material. The method comprises twin wire arc thermal spraying of the metallic layer to the surface, such that the thickness of the metallic layer is between 0.18mm and 0.25mm. More preferably, the thickness of the metallic layer is between 0.2mm and 0.25mm. Most preferably, the thickness of the metallic layer is between 0.2mm and 0.22mm. The bearing material may be attached by at least one of: injection moulding; hot plate welding; sintering; and powder coating.

In a fourth aspect of the present invention, there may be provided a method of applying a metallic layer to a surface of a substrate, to prepare the substrate for receiving a bearing material. The method comprises: grit blasting the surface of the substrate using aluminium oxide grit, the aluminium oxide having a grit mesh size of between 80 and 120; and twin wire arc thermal spraying of the metallic layer to the surface of the substrate. The bearing material may be attached by at least one of: injection moulding; hot plate welding; sintering; and powder coating.

In any of the above described embodiments, there are a number of optional or preferable additional features. Optionally, the surface of the substrate is curved. Alternatively, the surface of the substrate may be flat.

Beneficially, the material is a thermoplastic or thermoset material. More preferably, the material comprises one of: polypropylene; polyethylene; silicone rubber; a fluoropolymer; an acetal-based plastic; and PEEK.

In the preferred embodiment, the substrate forms part of a bearing, such as a hydrodynamic tilting pad thrust bearing or a hydrodynamic tilting pad journal bearing.

In another aspect of the present invention, there is provided a method of attaching a bearing material to a substrate, comprising: preparing the substrate for receiving the bearing material by applying a metallic layer to a surface of a substrate according to any of the methods described above; and applying the bearing material to the metallic layer by a moulding process, such that the metallic layer acts to mechanically lock the material to the substrate. The moulding process is beneficially at least one of: injection moulding; hot plate welding; sintering; and powder coating.

### Brief Description of the Drawings

An embodiments of the invention will now be described, by way of example only, with reference to the accompanying drawings, in which:
Figure 1 shows a section through a tilting pad journal bearing; and
Figure 2 shows a micrograph of a mechanical key layer according to the present invention.

### Description of a Specific Embodiment

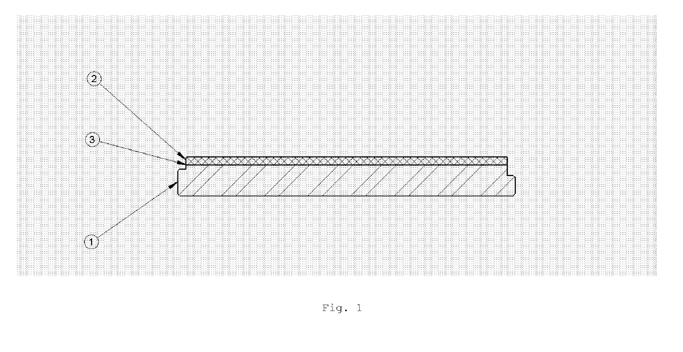

Referring first to Figure 1, there is shown a section through a tilting pad journal bearing. The embodiment comprises: substrate 1; thermoplastic bearing material 2; and mechanical key layer 3. The thermoplastic bearing material 2 is PEEK. The present invention relates to the methodology by which the mechanical key layer 3, and subsequently thermoplastic bearing material 2, are attached to the substrate 1.

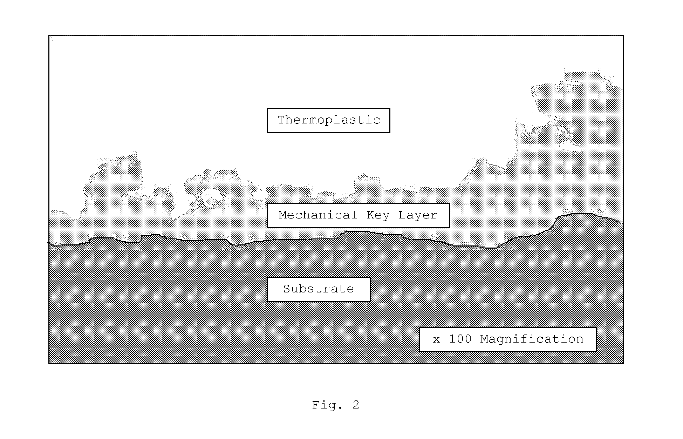

Referring now to Figure 2, there is shown a micrograph of a mechanical key layer according to the present invention. The mechanical key layer 3 is a metallic layer, which is applied to the substrate 1 by twin wire arc thermal spraying.

Thermal spraying has been used to produce rough, high friction surfaces for stair treads in marine or offshore applications. However, re-entrant surfaces are not a requirement for this particular application.

By adjusting the spraying parameters, it is possible to produce a mechanical key layer with porosity and re-entrant features that greatly increase the adhesion of a subsequently applied thermoplastic bearing layer 3. This is done with care as adhesion to the substrate may be adversely affected by some combinations of process parameters.

The equipment used is a: Metallisation 450 Energiser; Arcspray 140 gun; and Coating Thickness Meter.

On the 450 Energiser, the voltage setting is not infinitely variable. The switch setting results in step changes in voltage: 32, 35, 37.5V are typical. Other units have variacs allowing fully variable voltage setting. Below a certain voltage, around 32V, it is difficult to produce a repeatable coating. , the spray is intermittent and gun is liable to damage. High voltage increases the energy in the particles: they are hotter and more liable to flow when they hit the substrate.

Air of low pressure results in larger slower moving particles. Higher pressure produces smaller fast moving particles.

The arc current affects deposition rate and stand-off distance affects adhesion or cohesion. Therefore, all samples are coated at the same standoff distance. It was found that a combination of low pressure air and higher voltages results in build up of flaky deposits in the nozzle of the gun.

Typical Settings used for normal spraying are: voltage 32V; current 180A; stand off distance 150 mm; and air pressure 4.5 bar. Roughest surface was achieved with following settings: voltage 32V; current 180A; stand off distance 150 mm; and air pressure 3 bar (with low Pressure bypass).

In practice, the machine parameters are set in the middle of a plateau region to ensure any drift still produces reliable results. Specific values of the voltage would be 33.5 V and for air pressure 2.57 bar. With good process control the parameters could be set anywhere within the plateau region.

The standoff distance and the current do not appear to affect adhesion and roughness as much as voltage & air pressure and so are typically maintained at a constant level.

It has been found that aluminium bronze produces a better mechanical key surface than steel. The steel tends to produce globular features whereas the Aluminium Bronze is more fluid and creates splashes. Aluminium Bronze is also resistant to oxidation at the temperatures used for injection moulding (or hot plate welding) of PEEK material.

The substrate should be grit blasted to Sa3 using coarse aluminium oxide grit (80-120 mesh) prior to thermal spraying. The PEEK thermoplastic bearing layer 3.is applied by injection moulding.

Although an embodiment of the present invention has been described above, the skilled person will contemplate various modifications. For example, the present invention can be used for other applications, such as hydrodynamic tilting pad thrust bearings. The mechanical key layer can be applied to flat or curved surfaces.

A thermoplastic can be applied to the mechanical key layer by injection moulding as described above, or hot plate welding, sintering or powder coating. Alternatively, silicon rubber can be vulcanised to the mechanical key layer.

## Claims

1. A method of preparing a substrate for receiving a bearing material by a moulding process, the method comprising applying a metallic layer to a surface of the substrate using twin wire arc thermal spraying of the metallic layer to the surface.

2. The method of claim 1, wherein moulding process comprises at least one of: injection moulding; hot plate welding; sintering; and powder coating

3. The method of claim 1 or claim 2, wherein the substrate is metallic.

4. The method of any preceding claim, wherein the bearing material is a thermoplastic or thermoset material.

5. The method of claim 4, wherein the bearing material comprises one of: polypropylene; polyethylene; silicon rubber; a fluoropolymer; an acetal-based plastic; and PEEK.

6. The method of any preceding claim, wherein the substrate forms part of a hydrodynamic tilting pad thrust bearing or a hydrodynamic tilting pad journal bearing.

7. The method of any preceding claim, wherein the metallic layer comprises Aluminium Bronze.

8. The method of any preceding claim, wherein the twin wire arc thermal spraying uses at least one of: an arc voltage between 31V and 35V; an air pressure between 2 bar and 3 bar; an arc current between 170 and 190A; and a stand off distance of 150mm.

9. The method of any preceding claim, wherein the surface of the substrate is curved.

10. A method of attaching a bearing material to a substrate, comprising:
preparing the substrate for receiving the bearing material by applying a metallic layer to a surface of the substrate according to the method of any preceding claim; and
applying the bearing material to the metallic layer by a moulding process, such that the metallic layer acts to mechanically lock the bearing material to the substrate.

11. The method of claim 10, wherein the moulding process comprises at least one of: injection moulding; hot plate welding; sintering; and powder coating.
